# EUROPÄISCHE PATENTSCHRIFT

(11) **EP 0 648 534 B1**
(45) Veröffentlichungstag und Bekanntmachung des Hinweises auf die Patenterteilung: **29.01.1997**
(21) Anmeldenummer: 94113926.3
(22) Anmeldetag: 06.09.1994
(51) Int. Cl.: B01J 25/00, B01J 25/02

(54) **Aktivierter Metall-Festbettkatalysator nach Raney und Verfahren zu seiner Herstellung**
Activated Raney metal fixed bed catalyst and process for preparing the same
Catalyseur en lit fixe à métal activé de type Raney et procédé pour le préparer

(30) Priorität: 16.10.1993 DE 4335360
(43) Veröffentlichungstag der Anmeldung: 19.04.1995
(73) Patentinhaber: Degussa Aktiengesellschaft, 60311 Frankfurt (DE)
(72) Erfinder: Schütz, Peter, D-63589 Linsengericht (DE); Burmeister, Roland, Dr., D-63826 Geiselbach (DE); Despeyroux, Bertrand, Dr., F-78112 Fourqueux (FR); Mösinger, Hans, D-63517 Rodenbach (DE); Krause, Helmfried, D-63517 Rodenbach (DE); Deller, Klaus, Dr., D-63512 Hainburg (DE)

(56) Entgegenhaltungen:
- EP-A- 0 091 027
- DE-A- 2 829 901
- US-A- 3 558 365
- DATABASE WPI Section Ch, Week 7704, Derwent Publications Ltd., London, GB; Class J04, AN 77-06665Y & JP-A-51 143 585 (KAWAKEN FINE CH LTD) 10. Dezember 1976

## Beschreibung

Die Erfindung betrifft einen geformten und aktivierten Metall-Festbettkatalysator nach Raney. Er ist erhältlich durch Herstellen einer Mischung aus den Pulvern wenigstens einer Katalysatorlegierung und wenigstens eines Bindemittels, wobei die Katalysatorlegierungen jeweils ein katalytisch aktives Katalysatormetall und eine auslaugbare Legierungskomponente enthalten, unter Zugabe von Befeuchtungsmitteln und Zuschlagstoffen wie Verformungshilfsmitteln, Gleitmitteln, Plastifizieren und/oder Porenbildnern, Homogenisieren dieser Mischung und Verformen zu dem gewünschten Formkörper, Kalzinieren des Formkörpers und Aktivieren der so erhaltenen Katalysatorvorstufe durch teilweises oder vollständiges Auslaugen der auslaugbaren Legierungskomponente sowie abschließendes Waschen des fertigen Katalysators.

Aktivierte Metall-Katalysatoren sind in der chemischen Technik als Raney-Katalysatoren bekannt. Sie werden überwiegend in Pulverform bei einer Großzahl von Hydrierreaktionen an organischen Verbindungen eingesetzt.

Diese pulverigen Katalysatoren werden aus einer Legierung eines katalytisch aktiven Metalls, im folgenden auch als Katalysatormetall bezeichnet, mit einer in Alkalien löslichen weiteren Legierungskomponente hergestellt. Als Katalysatormetalle kommen hauptsächlich Nickel, Kobalt, Kupfer oder Eisen zum Einsatz.

Für die in Alkalien lösliche Legierungskomponente wird vorwiegend Aluminium eingesetzt, aber auch andere Komponenten sind verwendbar, insbesondere sind auch Zink und Silizium geeignet.

Diese sog. Raney-Legierung wird gemäß dem Verfahren nach Raney zunächst fein vermahlen. Anschließend wird das Aluminium durch Auslaugen mit Alkalien, wie zum Beispiel Natronlauge, ganz oder teilweise entfernt.

Damit wird das Legierungspulver aktiviert. Durch Auslaugen des Aluminiums weist es eine hohe spezifische Oberfläche zwischen 20 und 100 m²/g auf und ist reich an absorbiertem Wasserstoff. Das aktivierte Katalysatorpulver ist pyrophor und wird unter Wasser, organischen Lösungsmitteln oder durch Einbetten in hochsiedende organische Verbindungen gelagert.

Pulverkatalysatoren haben den Nachteil, daß sie nur in Batch-Verfahren eingesetzt werden können und nach der katalytischen Umsetzung durch aufwendige Filtration von den Reaktionsmedien abgetrennt werden müssen. Es sind daher verschiedene Verfahren zur Herstellung von Formkörpern bekannt geworden, die nach Auslaugen des Aluminiums zu aktivierten Metall-Festbettkatalysatoren führen. So sind zum Beispiel grobstückige, d. h. nur grob vermahlene Raney-Legierungen erhältlich, die durch Behandeln mit Natronlauge aktiviert werden können. Das Auslaugen und Aktivieren findet dabei nur in einer oberflächlichen Schale statt, deren Dicke durch die Auslaugbedingungen einstellbar ist.

Hauptnachteil von nach diesem Verfahren hergestellten Katalysatoren ist die schlechte mechanische Stabilität der relativ dünnen aktivierten Außenschicht. Da nur diese Außenschicht des Katalysators auch katalytisch aktiv ist, resultiert hieraus eine schnelle Desaktivierung, die dann bestenfalls durch eine erneute Aktivierung von tieferliegenden Legierungsschichten mit Natronlauge teilweise rückgängig gemacht werden kann.

Das US-Patent 4,826,799 beschreibt die Herstellung von aktivierten Metall-Festbettkatalysatoren nach Raney durch Vermischen eines Pulvers der Legierung aus Katalysatormetall und Aluminium mit einem organischen Polymer und gegebenenfalls einem Verformungshilfsmittel, Verformen dieser Mischung durch Extrusion oder Verpressen zu den gewünschten Formkörpern und Kalzinieren der Formkörper an Luft bei Temperaturen über 850° C. Dies führt durch Verbrennen der organischen Beimengungen zu einer Porenstruktur der Formkörper und zur Bildung von α-Aluminiumoxid, welches als keramisches Bindemittel zwischen den Legierungspartikeln wirkt und den Formkörpern die gewünschte mechanische Stabilität verleiht. Daran schließt sich die Aktivierung der Formkörper durch Auslaugen des restlichen, während des Kalzinierens nicht oxidierten, Aluminiums an.

Entscheidendes Merkmal dieses Verfahrens ist die Bildung von α-Aluminiumoxid zwischen den Legierungspartikeln als keramischer Binder. α-Aluminiumoxid ist im Gegensatz zu γ-Aluminiumoxid und Aluminium selbst nicht in Alkalien löslich und wird deshalb beim Aktivieren des Formkörpers mit Natronlauge nicht herausgelöst. Ein Fortschritt im Vergleich zu den Festbettkatalysatoren in Form grobstückiger Legierung ist die Bildung eines Porensystems durch Verbrennen der organischen Hilfsstoffe. Das Porensystem im fertigen Katalysator ermöglicht die Diffusion von Eduktmolekülen in den Katalysator hinein und von Produktmolekülen aus dem Katalysator hinaus.

Die gemäß USP 4,826,799 hergestellten Katalysatoren weisen jedoch auch gravierende Nachteile auf. Zur Bildung von α-Aluminiumoxid müssen die Formkörper oberhalb von 850° C kalziniert werden. Unterhalb von 850° C bildet sich nämlich kein α-Aluminiumoxid, sondern nur das in Alkalien lösliche γ-Aluminiumoxid. Die hohen Kalzinierungstemperaturen führen zu einem hohen Energieverbrauch.

Das als Bindemittel verwendete α-Aluminiumoxid ist katalytisch inaktiv und mindert somit die Katalysatoraktivität. Während des Kalzinierens bildet sich auf der Oberfläche der Legierungspartikel eine mehr oder weniger geschlossene Schicht aus diesem inaktiven, in Alkalien unlöslichen, Material. Dadurch wird die Aktivierung der Legierung erschwert. Im fertigen Katalysator stellt diese Schicht eine Diffusionsbarriere für die Eduktmoleküle dar, was weitere Aktivitätseinbußen zur Folge hat.

Von modernen Katalysatorsystemen wird zum Schutze der Umwelt eine leichte Wiederaufarbeitbarkeit gefordert. Die Aufarbeitung der keramisch gebundenen Metall-Festbettkatalysatoren ist jedoch wegen des unlöslichen keramischen Bindemittels schwierig.

I. Nakabajasi (Katal. Reakts. Zhidk, Faze 280-3 from: Ref. Zh., Khim. 1973, Abstr. No. 6B1100 (Russ) 1972) beschreibt die Bindung von pulverförmigen Katalysatorlegierungen mit bei hoher Temperatur schmelzenden, pulverförmigen, alkali- und säurefesten Glasfritten. Nach dem Kalzinationsvorgang wird das Aluminium wie üblich durch Auslaugen mit Alkalien aus der Katalysatorvorstufe herausgelöst.

Hierbei sind die gesinterten Glasfrittenteilchen zwischen den Legierungspartikeln für die mechanische Stabilität des Katalysators verantwortlich. Bei Zugabe eines geringen Anteils von Glaspulver besteht während der Auslaugung die Gefahr, daß sich die Formkörper auflösen. Bei Zugabe von hohen Glaspulveranteilen sind jedoch die in der gesinterten Glasmatrix eingebetteten Legierungspartikel nicht mehr aktivierbar. Hier liegt dann eine ähnlich massive Diffusionsbarriere vor wie bereits beschrieben. Außerdem liegen die für das Sintern der Glasfrittenanteile benötigten Temperaturen stets über 850° C.

Die Verwendung von niedrig schmelzenden Glasfritten (also mit einem Schmelzpunkt unter 850° C) ist nicht möglich, weil solche Glasfritten im allgemeinen gegen Laugen nicht chemisch stabil sind und somit beim Aktivierungsschritt aufgelöst werden.

Das japanische Patent JP 500 99987 beschreibt ein Verfahren zur Herstellung von Metall-Festbettkatalysatoren auf der Basis von Nickel-, Kobalt- oder Kupfer-Katalysatoren. Hierbei wird der eigentliche Nickel-, Kobalt- oder Kupfer-Katalysator zunächst mit bis zu 30 Gew.-% einer pulverigen Metall-Aluminium-Legierung vermischt. Diese Mischung wird dann zu geeigneten Formkörpern verformt und mit Wasserdampf bei erhöhter Temperatur behandelt. Hierbei entsteht γ-Al₂O₃, das bei diesem Katalysator als Bindemittel fungiert.

Eine sinngemäße Übertragung dieses Verfahrens zur Herstellung von aktivierten Metall-Festbettkatalysatoren nach Raney ist jedoch wie bereits erwähnt nicht möglich, da spätestens beim Aktivierungsvorgang mit Natronlauge, ohne den ein Katalysator nach Raney nicht präpariert werden kann, das Bindemittel γ-Al₂O₃ aufgelöst würde.

Das im Patent JP 500 99987 dargelegte Verfahren ist also ungeeignet zur Herstellung von verformten und aktivierten Metallkatalysatoren nach Raney.

Aufgabe der vorliegenden Erfindung ist es deshalb, geformte, aktivierte Metall-Festbettkatalysatoren nach Raney anzugeben, die die geschilderten Nachteile, wie hoher Energieverbrauch beim Kalzinieren, Verminderung der Katalysatoraktivität durch katalytisch inaktive, die Diffusion hemmende, Bindemittel und schlechte Wiederaufarbeitbarkeit der verbrauchten Katalysatoren, vermeiden. Ein weiterer Gegenstand der Erfindung ist das Herstellverfahren für die geformten Katalysatoren.

Die Aufgabe wird gelöst durch einen geformten, aktivierten Metall-Festbettkatalysator nach Raney, erhältlich durch Herstellen einer Mischung aus den Pulvern wenigstens einer Katalysatorlegierung und wenigstens eines Bindemittels, wobei die Katalysatorlegierungen jeweils mnindestens ein katalytisch aktives Katalysatormetall und gegebenenfalls Promotoren und eine auslaugbare Legierungskomponente enthalten, unter Zugabe von Befeuchtungsmitteln und Zuschlagstoffen wie Verformungshilfsmitteln, Gleitmitteln, Plastifizierern und/oder Porenbildnern, Homogenisieren dieser Mischung und Verformen zu dem gewünschten Formkörper, Kalzinieren des Formkörpers und Aktivieren der so erhaltenen Katalysatorvorstufe durch teilweises oder vollständiges Auslaugen der auslaugbaren Legierungskomponente sowie abschließendes Waschen des fertigen Katalysators.

Der Katalysator ist dadurch gekennzeichnet, daß als Bindemittel ein oder mehrere reine Katalysatormetalle verwendet werden und daß das Kalzinieren des Formkörpers bei Temperaturen unter 850° C durchgeführt wird.

Als Katalysatormetalle werden bevorzugt Nickel, Kobalt, Kupfer oder Eisen und als auslaugbare Legierungskomponente Aluminium, Zink oder Silizium eingesetzt. Das Gewichtsverhältnis zwischen Katalysatormetall und der auslaugbaren Legierungskomponente in der Katalysatorlegierung liegt, wie bei Raney-Legierungen üblich, im Bereich zwischen 30 : 70 und 70 : 30. Die als Bindemittel verwendeten Katalysatormetalle müssen im konkreten Anwendungsfall nicht mit den in der Katalysatorlegierung vorliegenden Katalysatormetallen übereinstimmen. Vielmehr eröffnet gerade die Möglichkeit, in der Katalysatorlegierung und als Bindemittel verschiedene Katalysatormetalle miteinander zu kombinieren, einen weiteren wichtigen Freiheitsgrad bei der Abstimmung der katalytischen Eigenschaften auf den jeweiligen katalytischen Prozeß.

Katalysatorlegierung und Binder werden in Form von Pulvern unter Zusatz von Befeuchtungsmitteln und Zuschlagstoffen wie Verformungshilfsmitteln, Gleitmitteln, Plastifizierern und gegebenenfalls Porenbildnern zu einer verformbaren Masse verarbeitet. Als Gleitmittel, Plastifizierer und Porenbildner können alle hierfür üblichen Materialien eingesetzt werden. In den US-Patentschriften 4,826,799, US 3,404,551 und US 3,351,495 wird eine Vielzahl geeigneter Materialien genannt. Bevorzugt werden Wachse, wie zum Beispiel Wachs C Mikropulver PM von Hoechst AG, Fette wie Magnesium- oder Aluminiumstearate oder Kohlenhydrate enthaltende Polymere wie Tylose (Methylcellulose) eingesetzt.

Die Feststoffe der Mischung werden unter Zugabe eines Befeuchtungsmittels sorgfältig in geeigneten Mischern oder Knetern homogenisiert. Als Befeuchtungsmittel sind Wasser, Alkohole, Glykole, Polyetherglykole oder deren Mischungen geeignet.

Beim Homogenisieren werden die Primär-Kornspektren der eingesetzten Pulver aus Katalysatorlegierung und Binder im wesentlichen nicht geändert. Es findet also keine Vermahlung statt.

Ziel dieser Vorbehandlung ist die Vorbereitung der Mischung für das nachfolgende Formgebungsverfahren. Anwendbar sind beispielsweise die Extrusion, Tablettierung und Kompaktierung.

Art und Reihenfolge der Einbringung der Zuschlagstoffe hängen von dem anzuwendenden Formgebungsverfahren ab. So erfordert die Extrusion eine plastische Masse bestimmter Viskosität, während für die Tablettierung ein rieselfähiges und leicht dosierbares Material notwendig ist. Die hierfür anzuwendenden Techniken wie zum Beispiel eine Agglomeration zur Bildung eines rieselfähigen Pulvers oder die Einstellung der richtigen Viskosität für die Extrusion werden vom Fachmann routinemäßig eingesetzt. Wichtig ist nur, daß durch die Vorbehandlung die Primärteilchengrößen von Legierungspulver und Bindemittelpulver im wesentlichen nicht verändert werden.

Als Formkörper kommen alle in der Katalysatortechnik üblichen Formen in Betracht. Es können beispielsweise je nach Erfordernis des Anwendungsfalles Kugeln, Ringe, Speichenringe oder Tabletten hergestellt werden.

Die fertigen Formkörper werden gegebenenfalls bis zur Gewichtskonstanz bei Temperaturen zwischen 80 und 120° C getrocknet und anschließend bei Temperaturen unterhalb von 850° C, bevorzugt zwischen 500 und 700° C, an Luft in kontinuierlich oder diskontinuierlich arbeitenden Öfen wie Drehrohröfen oder stationären Öfen kalziniert. Dabei verbrennen die organischen Zuschlagstoffe und lassen ein entsprechendes Porensystem zurück.

Porenstruktur und Porenvolumen der Katalysatoren können durch geeignete Wahl der porenbildenden Zuschlagstoffe in wetten Bereichen variiert werden. Die endgültig sich ausbildende Porenstruktur und das Porenvolumen werden auch durch die Korngrößen der eingesetzten Pulver der Katalysatorlegierung und des Bindemittels beeinflußt.

Durch entsprechende Wahl der genannten Parameter kann die Struktur der Formkörper an die Erfordernisse des jeweiligen katalytischen Prozesses angepaßt werden.

Beim Kalzinieren der Formkörper sintern Legierungspulver und Bindemittelpulver zusammen und verleihen den Formkörpern eine hohe mechanische Stabilität und gute Abriebfestigkeit. Typischerweise liegt die Härte von zylinderförmigen Tabletten nach dem Kalzinieren bei Werten zwischen 200 und 300 N (radial gemessen nach ASTM D 4179-82).

Nach dem Kalzinieren werden die Formkörper durch Auslaugen des Aluminiums mit Hilfe von Natronlauge aktiviert. Hierzu kann eine auf 80° C erwärmte 20 %ige Natronlauge verwendet werden. Eine Behandlungsdauer von 2 Stunden führt dabei zu einer aktiven Schale von etwa 0,1 bis 1,0 mm Dicke. Überraschenderweise hat sich dabei gezeigt, daß sich die Härte durch das Auslaugen noch leicht erhöht, im Falle von Tabletten auf Werte von über 300 N.

Diese Eigenschaften hängen eng mit den als Bindemittel verwendeten reinen Katalysatormetallen zusammen, die sich beim Auslaugen nicht auflösen und somit stabile Verbindungen zwischen den einzelnen Legierungspartikeln bilden. Das Zusammensintern des Legierungspulvers ohne Zusatz des metallischen Bindemittels führt dagegen zu Formkörpern, die sich beim Auslaugen teilweise auflösen und nur eine geringe Abriebfestigkeit der aktivierten Schale aufweisen.

Der erfindungsgemäße Festbettkatalysator besteht also aus den Pulverteilchen der Katalysatorlegierung, die durch Versintern mit einem Pulver der Katalysatormetalle selbst gebunden sind. Er enthält keinerlei katalytisch inaktives Bindemittel wie die aus dem Stand der Technik bekannten Festbettkatalysatoren.

Die als Bindemittel verwendeten Katalysatormetalle tragen zur katalytischen Aktivität bei. Durch das Beschränken der Kalzinierungstemperatur auf Werte unter 850° C wird die Bildung von α-Aluminiumoxid, wie Röntgenbeugungsanalysen des kalzinierten Materials ergeben, unterbunden. Eventuell sich bildendes γ-Aluminiumoxid wird beim Aktivieren des Katalysators mit Natronlauge aus dem Katalysatorkörper herausgelöst.

Das Fehlen von α-Aluminiumoxid im Katalysatorkörper macht sich beim Aktivieren deutlich bemerkbar. Während die erfindungsgemäßen Katalysatoren sich bei recht milden Bedingungen (20 %ige NaOH, 80° C) innerhalb von nur 2 Stunden aktivieren lassen, muß die Laugentemperatur beim Aktivieren von mit α-Aluminiumoxid gebundenen Katalysatoren (nach USP 4,826,799) angehoben und die Aktivierungsdauer verlängert werden, um eine gleich dicke, aktive Schale zu erhalten.

Für die Herstellung des erfindungsgemäßen Katalysators können die mittleren Korngrößen des Legierungspulvers und des als Bindemittel verwendeten Metallpulvers und auch das Gewichtsverhältnis von Legierungspulver zu Metallpulver in weiten Grenzen variiert werden. Da zwar das Metallpulver auch zur katalytischen Aktivität beiträgt, aber nicht durch Auslaugen von Aluminium aktiviert werden kann, ist sein möglicher Beitrag zur katalytischen Aktivität begrenzt. Deshalb sollte sein Anteil am Katalysator möglichst klein gehalten werden.

Bewährt haben sich Gewichtsverhältnisse zwischen dem Legierungspulver und dem Metallpulver im Bereich von 100 : 20 bis 100 : 0,5. Ebenso hat sich gezeigt, daß die Korngröße des Metallpulvers kleiner sein sollte als die Korngröße des Legierungspulvers. Die Teilchen des Metallpulvers können dann als kleine Brücken zwischen den größeren Legierungspartikeln verstanden werden. Es wurde gefunden, daß die Härte der fertigen Katalysatorkörper mit abnehmender Korngröße des Metallpulvers in gewissen Grenzen zunimmt.

Günstige Aktivitätswerte werden erhalten, wenn das Legierungspulver mittlere Korngrößen zwischen 10 und 500 µm aufweist.

Die erfindungsgemäßen Katalysatoren können zur Beeinflussung ihrer katalytischen Eigenschaften noch mit anderen Metallen dotiert sein. Ziel einer solchen Dotierung ist zum Beispiel die Verbesserung der Selektivität in einer bestimmten Reaktion. Die Dotierungsmetalle werden häufig auch als Promotoren bezeichnet. Dotierung bzw. Promotierung von Raney-Katalysatoren werden zum Beispiel in USP 4,153,578, DE-AS 21 01 856, DE-OS 21 00 373 und DE-AS 20 53 799 beschrieben. Geeignete Promotoren sind Chrom, Eisen, Kobalt, Tantal, Titan und/oder Molybdän sowie auch die Metalle der Platingruppe. Zweckmäßigerweise werden sie schon als Legierungsbestandteil der Katalysatorlegierung zugefügt. Typischerweise beträgt ihr Anteil an der Katalysatorlegierung bis zu 15 Gew.-%.

Im Falle der Dotierung mit Molybdän ist es zweckmäßig, die Dotierung erst nach dem Aktivieren des Katalysators vorzunehmen. Dazu wird der fertige Katalysator in eine Molybdatlösung von erhöhter Temperatur, z. B. bei 80° C, eingebracht. Abhängig von der Länge der Behandlungsdauer wird eine bestimmte Menge der Molybdänverbindung vom Katalysator adsorbiert.

Obwohl die vorliegende Erfindung es erlaubt, Metall-Festbettkatalysatoren mit in weiten Bereichen variierenden Parametern herzustellen und sie somit den jeweiligen Anwendungserfordernissen anzupassen, sind in der folgenden Tabelle Parameterbereiche für bevorzugte Ausführungsformen angegeben.

**Tabelle 1**

| Parameterbereiche für bevorzugte Metall-Festbettkatalysatoren in Tablettenform (⌀ 3 mm; Höhe 5,2 mm) | | |
|---|---|---|
| | vor Aktivierung | nach Aktivierung |
| aktivierte Schalendicke [mm] | - | 0,05 - 1 |
| BET-Oberfläche [m²/g] nach DIN 66132 | < 1 | 1 - 30 |
| Porenvolumen [ml/g] als Wasseraufnahme gemäß Degussa-Methode P204 | - | 0,03 - 0,06 |
| Härte [N] nach ASTM D 4179-82 (radial) | 200 - 300 | > 300 |
| Katalysatormetall [Gew.-%] | 56 62 | 62 - 70 |
| Aluminium [Gew.-%] | 38 - 44 | 30 - 38 |
| α-Al₂O₃ [Gew.-%] | - | - |
| γ-Al₂O₃ [Gew.-%] | - | - |

Das Porenvolumen der aktivierten Katalysatoren setzt sich im wesentlichen aus Makroporen zusammen (⌀ > 50 nm). Das Makroporenvolumen wird gewöhnlich durch Quecksilberintrusion bestimmt. Im Falle der aktivierten Metall-Festbett-Katalysatoren ist dieses Verfahren wegen Amalgambildung nicht anwendbar. Das in Tabelle 1 angegebene Porenvolumen wurde daher nach Deaktivierung der Katalysatoren mittels Wasserstoffperoxid als Wasseraufnahmevolumen gemäß einer standard Degussa-Methode P 204 ermittelt.

Bei der BET-Oberfläche in Tabelle 1 handelt es sich um die mittels Stickstoffadsorptionsisotherme nach Brunauer, Emmett und Teller ermittelte spezifische Oberfläche der fertigen Katalysatorformkörper. Zur BET-Oberfläche trägt dabei im wesentlichen nur die aktivierte Schale der Tabletten von 0,05 bis 1 mm Dicke bei. Die angegebene Oberfläche ist dagegen auf die Gesamtmasse der Tabletten bezogen, die auch die Masse des nichtaktivierten, d. h. niedrigoberflächigen Kerns der Tabletten einschließt.

Für die wirtschaftliche Nutzung der Erfindung sind die nach dem Kalzinieren resultierenden Katalysatorvorstufen ebenfalls von großer Bedeutung. Sie sind noch nicht pyrophor und können daher ohne Schwierigkeiten gehandhabt und transportiert werden. Die Aktivierung kann dann vom Anwender kurz vor Gebrauch vorgenommen werden. Eine Lagerung unter Wasser oder organischen Lösungsmitteln oder die Einbettung in organischen Verbindungen ist für die Katalysatorvorstufen nicht erforderlich.

Gegenüber den fertigen Katalysatoren handelt es sich bei den Katalysatorvorstufen um Körper mit homogener Zusammensetzung aus einer innigen Mischung von Partikeln der Katalysatorlegierung und des als Bindemittel wirkenden Katalysatormetalles, die zu einem mechanisch stabilen und porösen Formkörper versintert sind. Seine Dichte liegt je nach Zusammensetzung der Katalysatorlegierung und abhängig vom Porenvolumen zwischen 1,3 und 5,5 g/cm³. Vorteilhaft sind Porenvolumina bis 0,5 cm³/g. Da die Katalysatorvorstufen noch nicht aktiviert sind, beträgt ihre spezifische Oberfläche weniger als 1 m²/g. Das Gewichtsverhältnis der in der Katalysatorvorstufe insgesamt vorhandenen Katalysatormetalle (aus Katalysatorlegierung plus Bindemittel) zu der auslaugbaren Legierungskomponente liegt zwischen 30 : 70 und 75 : 25.

Die Katalysatorvorstufe besteht zu über 99 Gew.-% aus der Katalysatorlegierung und dem als Bindemittel wirkenden Katalysatormetall. Beim Kalzinieren der Vorstufe bei Temperaturen unter 850° C können sich geringfügige Anteile von oberflächlichen Oxiden bilden, die jedoch bei der Laugenaktivierung entfernt werden und daher auf die späteren katalytischen Eigenschaften keinen Einfluß haben.

Es wurden verschiedene erfindungsgemäße Katalysatoren hergestellt und mit Vergleichskatalysatoren aus dem Stand der Technik bezüglich ihrer katalytischen Aktivität bei der Nitrobenzolhydrierung zu Anilin verglichen.

Für die Herstellung wurden folgende Ausgangsmaterialien eingesetzt:

### Legierungspulver:

| | |
|---|---|
| • Ni/Al-Legierung 53/47 (Gewichtsverhältnis Nickel/Aluminium) volumenbezogener mittlerer Korndurchmesser: | d₅₀ = 65 µm |
| • Cu/Al-Legierung 50/50 | d₅₀ = 54 µm |
| • Co/Al-Legierung 50/50 | d₅₀ = 60 µm |
| • Fe/Al-Legierung 50/50 | d₅₀ = 57 µm |

### Dotierte Legierungspulver

| | |
|---|---|
| • Ni/Cr/Fe/Al-Legierung 47,4/1,5/1,1/50 | d₅₀ = 57 µm |
| • Ni/Ta/Al-Legierung 49 / 1 / 50 | d₅₀ = 65 µm |
| • Ni/Co/Al-Legierung 45 / 5 / 50 | d₅₀ = 65 µm |
| • Ni/Ti/Al-Legierung 48 / 2 / 50 | d₅₀ = 65 µm |

### Molybdän-Lösung für nachträgliche Dotierung

- 4,2 %ige Na-Molybdatlösung

### Bindemittel

| | |
|---|---|
| • Ni-Pulver (> 99 % Nickel) | d₅₀ = 21 µm |
| • Cu-Pulver | d₅₀ = 23 µm |
| • Co-Pulver | d₅₀ = 20 µm |
| • Fe-Pulver | d₅₀ = 8 µm |
| • NiO-Pulver | d₅₀ = 21 µm |

### Zuschlagstoffe (Gleitmittel, Porenbildner)

- Wachspulver (Ethylenbisstearoylamid) ⌀ = 15 µm
- Aerosil 300 (pyrogene Kieselsäure)
- Befeuchtungsmittel: Wasser

Aus Legierungspulver, Bindemittel und Zuschlagstoffen wurde jeweils eine leicht rieselfähige, tablettierbare Katalysatormischung hergestellt. Hierzu wurde zunächst eine Mischung von Legierungspulver und Bindemittel unter Zugabe von Wasser in einem Mischer sorgfältig homogenisiert und nach einer Zwischentrocknung mit dem Wachspulver und gegebenenfalls der Kieselsäure gemischt.

Die folgenden Tabellen 2 bis 4 enthalten Angaben zur Zusammensetzung der Katalysatormischungen vor der Tablettierung (Tabelle 2), zu den Kalzinierbedingungen (Tabelle 3) und zu den Aktivierungsbedingungen (Tabelle 4). Die erfindungsgemäßen Beispiele sind in den Tabellen mit "B" und die Vergleichsbeispiele mit "VB" gekennzeichnet.

Aus den Katalysatormischungen nach Tabelle 2 wurden Tabletten mit einem Durchmesser von 3 mm und einer Höhe von 5,2 mm gepreßt. Die Tabletten wurden nach dem Kalzinieren in 20 %iger Natronlauge aktiviert.

**Tabelle 2**

| Zusammensetzung der Katalysatormischungen vor der Verformung | | | |
|---|---|---|---|
| Nr. | Legierung jeweils 1000 g | Binder | Zuschlagstoffe |
| B1 | Ni/Al | 150 g Ni | 25 g Wachspulver |
| B2 | Cu/Al | 150 g Cu | 25 g Wachspulver |
| B3 | Co/Al | 150 g Co | 25 g Wachspulver |
| B4 | Fe/Al | 150 g Fe | 25 g Wachspulver |
| B5 | Ni/Al | 150 g Ni | 25 g Wachspulver |
| B6 | Ni/Al | 100 g Ni | 25 g Wachspulver |
| B7 | Ni/Al | 50 g Fe | 25 g Wachspulver |
| B8 | Ni/Al | 70 g Ni + 70 g Fe | 25 g Wachspulver |
| B9 | Ni/Cr/Fe/Al | 150 g Ni | 25 g Wachspulver |
| B10 | Ni/Ta/Al | 150 g Ni | 25 g Wachspulver |
| B11 | Ni/Co/Al | 150 g Ni | 25 g Wachspulver |
| B12 | Ni/Ti/Al | 150 g Ni | 25 g Wachspulver |
| B13 | Ni/Al | 150 g Ni | 25 g Wachspulver |
| VB1 | Ni/Al | 150 g NiO | 25 g Wachspulver |
| VB2 | Ni/Al | | 50 g Wachspulver + 50 g Aerosil |
| VB3 | Ni/Al | | 25 g Wachspulver |

Die Katalysatormischungen der Beispiele B1 bis B6 ergaben aktivierte Metall-Festbettkatalysatoren, bei denen das als Bindemittel verwendete Katalysatormetall identisch war mit dem katalytisch aktiven Metall in der Katalysatorlegierung. Die Katalysatormischung B5 ist identisch mit der von B1. Die Formkörper von Beispiel B5 wurden jedoch doppelt so lange aktiviert (siehe Tabelle 4), um eine größere Schalendicke zu erzeugen.

In den Beispielen B7 und B8 wurden Katalysatoren hergestellt, bei denen das als Bindemittel verwendete Metall sich vom katalytisch aktiven Metall in der Legierung unterschied. In Beispiel B8 wurden sogar zwei verschiedene Metallpulver als Bindemittel eingesetzt.

Bei den Beispielen B9 bis B12 handelt es sich um Katalysatormischungen, bei denen die Katalysatorlegierung noch mit Cr, Fe, Ta, Co oder Ti dotiert war. Aus der Katalysatormischung von B13 wurden Katalysatoren hergestellt, die nach dem Aktivieren durch 90 minütige Behandlung mit einer 4,2 % Natrium-Molybdatlösung von 80° C mit Molybdän dotiert wurden.

In Vergleichsbeispiel VB1 wurde ein oxidisches Material (NiO) als Bindemittel verwendet.

Der Masse von VB3 wurde kein Bindemittel zugegeben, vielmehr sollte sich durch Kalzinieren bei 900° C α-Aluminiumoxid als keramischer Binder bilden.

**Tabelle 3**

| Kalzinierbedingungen | | | |
|---|---|---|---|
| Nr. | Temperatur [°C] | Dauer [min] | Härte nach Kalzinierung [N] |
| B1 | 700 | 120 | 280 |
| B2 | 500 | 360 | > 300 |
| B3 | 700 | 120 | 236 |
| B4 | 700 | 120 | 300 |
| B5 | 700 | 120 | 280 |
| B6 | 800 | 120 | > 320 |
| B7 | 700 | 120 | > 300 |
| B8 | 700 | 120 | 300 |
| B9 | 700 | 120 | > 300 |
| B10 | 700 | 120 | 300 |
| B11 | 700 | 120 | > 300 |
| B12 | 700 | 120 | > 300 |
| B13 | 700 | 120 | 280 |
| VB1 | 700 | 120 | 25 |
| VB2 | 700 | 120 | 18 |
| VB3 | 900 | 120 | > 300 |

**Tabelle 4**

| Aktivierung in 20 %iger NaOH | | | | |
|---|---|---|---|---|
| Nr. | Temperatur [°C] | Dauer [min] | Schalendicke [mm] | Härte nach Aktivierung [N] |
| B1 | 80 | 120 | 0,3 | > 300 |
| B2 | 80 | 120 | 0,3 | > 300 |
| B3 | 80 | 120 | 0,3 | > 300 |
| B4 | 80 | 120 | 0,2 | > 300 |
| B5 | 80 | 240 | 0,45 | > 300 |
| B6 | 80 | 120 | 0,3 | > 300 |
| B7 | 80 | 120 | 0,3 | > 300 |
| B8 | 80 | 120 | 0,3 | > 300 |
| B9 | 80 | 120 | 0,3 | > 300 |
| B10 | 80 | 120 | 0,3 | > 300 |
| B11 | 80 | 120 | 0,3 | > 300 |
| B12 | 80 | 120 | 0,3 | > 300 |
| B13 | 80 | 120 | 0,3 | > 300 |
| VB1 | 80 | 120 | Schicht nicht abriebfest | |
| VB2 | 80 | 120 | Tabletten zerfallen | |
| VB3 | 100 | 240 | 0,3 | > 300 |

Die Vergleichsbeispiele VB1 und VB2 lieferten nach der Aktivierung keine brauchbaren Katalysatoren. Die Formkörper von VB1 waren nicht abriebfest und die Formkörper von VB2 zerfielen während der Aktivierung.

Die Formkörper von Vergleichsbeispiel 3 ließen sich nur schwer aktivieren. Um wenigstens eine vergleichbare Schalendicke zu erhalten wie bei den erfindungsgemäßen Beispielen, mußte die Laugentemperatur auf 100° C erhöht und die Aktivierungsdauer verdoppelt werden. In diesem Verhalten äußert sich die passivierende Wirkung des als Bindemittel bei hohen Kalziniertemperaturen in situ gebildeten keramischen Bindemittels α-Aluminiumoxid.

Alle Katalysatoren wurden nach der Aktivierung mehrfach mit Wasser gewaschen und bis auf die Katalysatoren von Beispiel B4 unter Wasser gelagert. Die Katalysatoren von B4 wurden durch zweimaliges dekantierendes Waschen mit Isopropanol vom Wasser befreit und unter Isopropanol gelagert, um ein Rosten des Katalysators zu verhindern. Das Schüttgewicht aller Katalysatoren betrug im feuchten Zustand etwa 2 kg/l.

### Beispiel 14

Die Katalysatoren der Beispiele 1, 3, 7, 9 bis 12 und von Vergleichsbeispiel VB3 wurden bezüglich ihrer katalytischen Aktivität bei der Nitrobenzolhydrierung miteinander verglichen.

Dazu wurden 250 g Nitrobenzol und 250 g Ethanol in einen Rührautoklaven mit Begasungsrührer von 1 l Fassungsvermögen eingefüllt. In den Rührautoklaven wurden jeweils 20 g des zu untersuchenden Katalysators mittels eines Katalysatorkorbes so eingehängt, daß die Katalysatorformkörper gut vom Edukt-Lösungsmittelgemisch umspült und mit Wasserstoff begast wurden. Die Hydrierung wurde bei einem Wasserstoffdruck von 40 bar und einer Temperatur von 150° C durchgeführt. Nach jeweils 2, 4 und 5 Stunden Reaktionszeit wurden Proben gezogen und mittels eines Gaschromatografen analysiert. Die Ergebnisse sind in Tabelle 5 aufgelistet.

**Tabelle 5**

| Hydrierung von Nitrobenzol zu Anilin | | | |
|---|---|---|---|
| Nr. | Umsatz zu Anilin nach | | |
| | 2 h | 4 h | 5 h |
| B1 | 17,3 % | 40,2 % | 46,2 % |
| B3 | 16,4 % | 32,2 % | 47,8 % |
| B7 | 14,0 % | 50,0 % | 59,0 % |
| B9 | 24,0 % | 57,0 % | 77,5 % |
| B10 | 18,3 % | 46,2 % | 58,0 % |
| B11 | 26,4 % | 58,6 % | 71,5 % |
| B12 | 21,0 % | 47,0 % | 58,5 % |
| VB3 | 0,9 % | 3,2 % | 4,0 % |

Die Ergebnisse von Tabelle 5 zeigen, daß die erfindungsgemäßen Katalysatoren gegenüber dem Vergleichskatalysator eine wesentlich gesteigerte Aktivität bei der Hydrierung von Nitrobenzol zu Anilin aufweisen. Die geringe Aktivität des Vergleichskatalysators ist vermutlich auf das inerte keramische Bindemittel α-Aluminiumoxid zurückzuführen, welches über seinen eigentlichen Gewichtsanteil hinaus einen negativen Einfluß auf die katalytische Aktivität durch Bildung einer Diffusionsbarriere für die Eduktmoleküle hat.

Demgegenüber enthalten die erfindungsgemäß mit katalytisch aktiven Metallen gebundenen Katalysatoren kein inertes Material.

Die vorliegende Erfindung stellt also der Technik aktivierte Metall-Festbettkatalysatoren nach Raney zur Verfügung, die sich auszeichnen durch
- hohe katalytische Aktivität
- hohe Härte
- gute Abriebfestigkeit
- relativ niedrige Temperaturen bei Kalzinierung und Aktivierung und
- gute Wiederaufarbeitbarkeit
und die deshalb mit Vorteil bei der Hydrierung von organischen Verbindungen im Festbett verwendet werden können. Beispielhafte Einsatzgebiete sind die Hydrierung von Nitrogruppen, die Hydrierung von C-C-Doppelbindungen, die Hydrierung von Zuckern und die Hydrierung von aromatischen Ringen.

## Patentansprüche

1. Geformter, aktivierter Metall-Festbettkatalysator nach Raney, erhältlich durch Herstellen einer Mischung aus den Pulvern wenigstens einer Katalysatorlegierung und wenigstens eines Bindemittels, wobei die Katalysatorlegierungen jeweils mindestens ein katalytisch aktives Katalysatormetall und gegebenenfalls Promotoren und eine auslaugbare Legierungskomponente enthalten, unter Zugabe von Befeuchtungsmitteln und Zuschlagstoffen wie Verformungshilfsmitteln, Gleitmitteln, Plastifizierern und/oder Porenbildnern, Homogenisieren dieser Mischung und Verformen zu dem gewünschten Formkörper, Kalzinieren des Formkörpers und Aktivieren der so erhaltenen Katalysatorvorstufe durch teilweises oder vollständiges Auslaugen der auslaugbaren Legierungskomponente sowie abschließendes Waschen des fertigen Katalysators
**dadurch gekennzeichnet**,
daß als Bindemittel ein oder mehrere reine Katalysatormetalle verwendet werden und daß das Kalzinieren des Formkörpers bei Temperaturen unter 850° C durchgeführt wird.

2. Geformter Katalysator nach Anspruch 1,
**dadurch gekennzeichnet**,
daß die Katalysatormetalle in den Katalysatorlegierungen ausgewählt sind aus der Gruppe Nickel, Kobalt, Kupfer und Eisen, daß als auslaugbare Legierungskomponente Aluminium, Zink oder Silizium verwendet werden, insbesondere Aluminium, mit einem Gewichtsverhältnis zwischen den Katalysatormetallen und der auslaugbaren Legierungskomponente in den Katalysatorlegierungen von 30 : 70 bis 70 : 30 und daß die als Bindemittel wirkenden reinen Katalysatormetalle ebenfalls aus der Gruppe Nickel, Kobalt, Kupfer und Eisen ausgewählt sind.

3. Geformter Katalysator nach Anspruch 2,
**dadurch gekennzeichnet**,
daß die Katalysatorlegierungen und die als Bindemittel wirkenden reinen Katalysatormetalle im Gewichtsverhältnis von 100 : 20 bis 100 : 0,5 zueinander stehen.

4. Geformter Katalysator nach Anspruch 3,
**dadurch gekennzeichnet**,
daß die Partikel der pulverigen Katalysatorlegierungen eine mittlere Korngröße zwischen 10 und 500 µm aufweisen und die mittlere Korngröße der als Bindemittel verwendeten pulverigen Katalysatormetalle kleiner ist als die der Katalysatorlegierungen.

5. Geformter Katalysator nach den Ansprüchen 1 bis 4,
**dadurch gekennzeichnet**,
daß die Katalysatorlegierungen noch bis zu 15 Gew.-% bezogen auf das Gewicht der Katalysatorlegierungen mit den Elementen Chrom, Eisen, Kobalt, Tantal und/oder Titan als Promotoren dotiert sind.

6. Geformter Katalysator nach den Ansprüchen 1 bis 4,
**dadurch gekennzeichnet**,
daß er noch mit Molybdän als Promotor dotiert ist.

7. Geformter Katalysator nach den Ansprüchen 1 bis 6,
**dadurch gekennzeichnet**,
daß er eine aktivierte Schale mit einer Dicke von 0,05 bis 1,0 mm, bevorzugt 0,1 bis 0,5 mm, besitzt.

8. Geformter Katalysator nach den Ansprüchen 1 bis 7,
**dadurch gekennzeichnet**,
daß er eine Dichte von 1,3 bis 5,5 g/cm³ und ein Porenvolumen von 0,01 bis 0,5 cm³/g aufweist.

9. Verfahren zur Herstellung eines geformten Metall-Festbettkatalysators nach Raney durch Herstellen einer Mischung aus den Pulvern wenigstens einer Katalysatorlegierung und wenigstens eines Bindemittels, wobei die Katalysatorlegierungen jeweils mindestens ein katalytisch aktives Katalysatormetall und gegebenenfalls Promotoren und eine auslaugbare Legierungskomponente enthalten, unter Zugabe von Befeuchtungsmitteln und Zuschlagstoffen wie Verformungsmitteln, Gleitmitteln, Plastifizierern und/oder Porenbildnern, Homogenisieren dieser Mischung und Verformen zu gewünschten Formkörpern, Kalzinieren der Formkörper und Aktivieren der so erhaltenen Katalysatorvorstufen durch teilweises oder vollständiges Auslaugen der auslaugbaren Legierungskomponente sowie abschließendes Waschen des fertigen Katalysators,
**dadurch gekennzeichnet**,
daß als Bindemittel ein oder mehrere reine Katalysatormetalle verwendet werden und daß das Kalzinieren des Formkörpers bei Temperaturen unter 850° C durchgeführt wird.

10. Verfahren nach Anspruch 9,
**dadurch gekennzeichnet**,
daß die Katalysatormetalle in den Katalysatorlegierungen ausgewählt sind aus der Gruppe Nickel, Kobalt, Kupfer und Eisen, daß als auslaugbare Legierungskomponente Aluminium, Zink oder Silizium verwendet werden, insbesondere Aluminium, mit einem Gewichtsverhältnis zwischen den Katalysatormetallen und der auslaugbaren Legierungskomponente in den Katalysatorlegierungen von 30 : 70 bis 70 : 30 und daß die als Bindemittel wirkenden reinen Katalysatormetalle ebenfalls aus der Gruppe Nickel, Kobalt, Kupfer und Eisen ausgewählt sind.

11. Verfahren nach Anspruch 10,
**dadurch gekennzeichnet**,
daß die Katalysatorlegierungen und die als Bindemittel wirkenden reinen Katalysatormetalle im Gewichtsverhältnis von 100 : 20 bis 100 : 0,5 zuneinander stehen.

12. Verfahren nach Anspruch 11,
**dadurch gekennzeichnet**,
daß die Partikel der pulverigen Katalysatorlegierungen eine mittlere Korngröße zwischen 10 und 500 µm aufweisen und die mittlere Korngröße der als Bindemittel verwendeten pulverigen Katalysatormetalle kleiner ist als die der Katalysatorlegierungen.

13. Verfahren nach den Ansprüchen 9 bis 12,
**dadurch gekennzeichnet**,
daß das Auslaugen der Legierungskomponente so lange fortgeführt wird, bis die ausgelaugte und damit aktivierte Schale eine Dicke von 0,05 bis 1,0 mm, bevorzugt 0,1 bis 0,5 mm, besitzt.

14. Verfahren nach den Ansprüchen 9 bis 13,
**dadurch gekennzeichnet**,
daß die Katalysatorlegierungen noch bis zu 15 Gew.-% bezogen auf das Gewicht der Katalysatorlegierungen mit den Elementen Chrom, Eisen, Kobalt, Tantal und/oder Titan als Promotoren dotiert sind.

15. Verfahren nach den Ansprüchen 9 bis 13,
**dadurch gekennzeichnet**,
daß die Katalysatoren nach dem Aktivieren durch Einbringen in eine Molybdatlösung bei erhöhter Temperatur mit Molybdän als Promotor dotiert werden.

16. Verwendung des geformten Katalysators nach den Ansprüchen 1 bis 8 für die Hydrierung organischer Verbindungen im Festbett.

17. Katalysatorvorstufe für einen aktivierten Metall-Festbettkatalysator nach Raney,
**dadurch gekennzeichnet**,
daß er eine innige Mischung aus den Pulvern wenigstens einer Katalysatorlegierung und wenigstens eines reinen katalytisch aktiven Katalysatormetalls als Bindemittel enthält, wobei die Katalysatorlegierungen jeweils mindestens ebenfalls ein Katalysatormetall und gegebenenfalls Promotoren sowie eine auslaugbare Legierungskomponente enthalten, daß die Partikel der Katalysatorlegierungen und der Katalysatormetalle zu einem mechanisch stabilen Formkörper versintert sind, der eine Dichte von 1,3 bis 5,5 g/cm³, ein Porenvolumen bis 0,5 cm³/g sowie eine BET-Oberfläche von unter 1 m²/g aufweist und daß das Gewichtsverhältnis zwischen den im Formkörper enthaltenen Katalysatormetallen und der auslaugbaren Legierungskomponente zwischen 30 : 70 und 75 : 25 beträgt.

18. Katalysatorvorstufe nach Anspruch 17,
**dadurch gekennzeichnet**,
daß die Katalysatormetalle in den Katalysatorlegierungen ausgewählt sind aus der Gruppe Nickel, Kobalt, Kupfer und Eisen, daß als auslaugbare Legierungskomponente Aluminium, Zink oder Silizium verwendet werden, insbesondere Aluminium, mit einem Gewichtsverhältnis zwischen den Katalysatormetallen und der auslaugbaren Legierungskomponente in den Katalysatorlegierungen von 30 : 70 bis 70 : 30 und daß die als Bindemittel wirkenden reinen Katalysatormetalle ebenfalls aus der Gruppe Nickel, Kobalt, Kupfer und Eisen ausgewählt sind.

19. Katalysatorvorstufe nach Anspruch 18,
**dadurch gekennzeichnet**,
daß die mittleren Korngrößen der Partikel der Katalysatorlegierungen zwischen 10 und 500 µm liegen und die mittleren Korngrößen der Katalysatormetalle kleiner als die mittleren Korngrößen der Katalysatorlegierungen sind und daß das Gewichtsverhältnis zwischen den Katalysatorlegierungen und den Katalysatormetallen zwischen 100 : 20 bis 100 : 0,5 beträgt.

20. Katalysatorvorstufe nach Anspruch 19,
**dadurch gekennzeichnet**,
daß die Katalysatorlegierungen noch bis zu 15 Gew.-% bezogen auf das Gewicht der Katalysatorlegierungen mit den Elementen Chrom, Eisen, Kobalt, Tantal und/oder Titan als Promotoren dotiert sind.

## Claims

1. A shaped, activated Raney metal fixed-bed catalyst, obtainable by preparing a mixture of powders of at least one catalyst alloy and at least one binder, wherein the catalyst alloys each contain at least one catalytically active catalyst metal and optionally promoters and an extractable alloy component, with the addition of moistening agents and additives such as shaping aids, lubricants, plasticisers and/or pore-producers, homogenising and shaping this mixture to give the desired moulded items, calcining these moulded items and activating the catalyst precursors obtained in this way by partially or completely extracting the extractable alloy component and subsequently washing the final catalyst,
characterised in that
one or more pure catalyst metals are used as the binder and that calcination of the moulded items is performed at temperatures below 850°C.

2. A shaped catalyst according to Claim 1,
characterised in that
the catalyst metals in the catalyst alloys are selected from the group nickel, cobalt, copper and iron, that the extractable alloy component used is aluminium, zinc or silicon, in particular aluminium, with a ratio by weight of catalyst metal to extractable alloy component in the catalyst alloys of 30 : 70 to 70 : 30 and that the pure catalyst metals acting as binder are also selected from the group nickel, cobalt, copper and iron.

3. A shaped catalyst according to Claim 2,
characterised in that
the catalyst alloys and pure catalyst metals acting as binder are present in the ratio by weight of 100 : 20 to 100 : 0.5.

4. A shaped catalyst according to Claim 3,
characterised in that
the particles of powdered catalyst alloys have an average particle size between 10 and 500 µm and the average particle size of the powdered catalyst metals used as binder is less than that of the catalyst alloys.

5. A shaped catalyst according to Claims 1 to 4,
characterised in that
the catalyst alloys are also doped with up to 15 wt.%, with reference to the weight of catalyst alloys, of the elements chromium, iron, cobalt, tantalum and/or titanium as promoters.

6. A shaped catalyst according to Claims 1 to 4,
characterised in that
it is also doped with molybdenum as a promoter.

7. A shaped catalyst according to Claims 1 to 6,
characterised in that
it has an activated outer layer with a thickness of 0.05 to 1.0 mm, preferably 0.1 to 0.5 mm.

8. A shaped catalyst according to Claims 1 to 7,
characterised in that
it has a density of 1.3 to 5.5 g/cm³ and a pore volume of 0.01 to 0.5 cm³/g.

9. A process for preparing a shaped Raney metal fixed-bed catalyst by preparing a mixture of powders of at least one catalyst alloy and at least one binder, wherein the catalyst alloys each contain at least one catalytically active catalyst metal and optionally promoters and an extractable alloy component, with the addition of moistening agents and additives such as shaping aids, lubricants, plasticisers and/or pore-producers, homogenising and shaping this mixture to give the desired moulded items, calcining the moulded items and activating the catalyst precursors obtained in this way by partially or completely extracting the extractable alloy component and subsequently washing the final catalyst,
characterised in that
one or more pure catalyst metals are used as the binder and that calcination of the moulded items is performed at temperatures below 850°C.

10. A process according to Claim 9,
characterised in that
the catalyst metals in the catalyst alloys are selected from the group nickel, cobalt, copper and iron, that the extractable alloying component used is aluminium, zinc or silicon, in particular aluminium, with a ratio by weight of catalyst metals to extractable alloying component in the catalyst alloys of 30 : 70 to 70 : 30 and that the pure catalyst metals acting as binder are also selected from the group nickel, cobalt, copper and iron.

11. A process according to Claim 10,
characterised in that
the catalyst alloys and pure catalyst metals acting as binder are present in the ratio by weight of 100 : 20 to 100 : 0.5.

12. A process according to Claim 11,
characterised in that
the particles of powdered catalyst alloys have an average particle size between 10 and 500 µm and the average particle size of the powdered catalyst metals used as binder is smaller than that of the catalyst alloys.

13. A process according to Claims 9 to 12,
characterised in that
extraction of the alloying component is continued until the extracted and thereby activated outer layer has a thickness of 0.05 to 1.0 mm, preferably 0.1 to 0.5 mm.

14. A process according to Claims 9 to 13,
characterised in that
the catalyst alloys are also doped with up to 15 wt.%, with reference to the weight of catalyst alloys, of the elements chromium, iron, cobalt, tantalum and/or titanium as promoters.

15. A process according to Claims 9 to 13,
characterised in that
the catalysts are doped with molybdenum as a promoter, after activation, by introduction into a molybdate solution at elevated temperature.

16. Use of the shaped catalysts according to Claims 1 to 8 for the hydrogenation of organic compounds in a fixed-bed.

17. Catalyst precursors for an activated Raney metal fixed-bed catalyst,
characterised in that
it contains an intimate mixture of the powders of at least one catalyst alloy and at least one pure catalytically active catalyst metal as binder, wherein the catalyst alloys each also contain at least one catalyst metal and optionally promoters and an extractable alloy component, that the particles of catalyst alloys and of catalyst metals are sintered to give a mechanically stable moulded item, which has a density of 1.3 to 5.5 g/cm³, a pore volume of up to 0.5 cm³/g and a BET surface area of less than 1 m²/g and that the ratio by weight of catalyst metals to alloying component contained in the moulded item is between 30 : 70 and 75 : 25.

18. Catalyst precursors according to Claim 17,
characterised in that
the catalyst metals in the catalyst alloys are selected from the group nickel, cobalt, copper and iron, that the extractable alloying component used is aluminium, zinc or silicon, in particular aluminium, with the ratio by weight of catalyst metals to extractable alloying component in the catalyst alloys of 30 : 70 to 70 : 30, and that the pure catalyst metals acting as binder are also selected from the group nickel, cobalt, copper and iron.

19. Catalyst precursors according to Claim 18,
characterised in that
the average particle sizes of the particles of catalyst alloys are between 10 and 500 µm and the average particle sizes of the catalyst metals are smaller than the average particle sizes of the catalyst alloys and that the ratio by weight of catalyst alloys to catalyst metals is between 100 : 20 and 100 : 0.5.

20. Catalyst precursors according to Claim 19,
characterised in that the catalyst alloys are also doped with up to 15 wt.%, with reference to the weight of catalyst alloys, of the elements chromium, iron, cobalt, tantalum and/or titanium as promoters.

## Revendications

1. Catalyseur en lit fixe à métal activé, mis en forme du type Raney, obtenu par préparation d'un mélange des poudres d'au moins un alliage de catalyseur et d'au moins un liant, tandis que les alliages de catalyseur contiennent chacun au moins un métal catalyseur catalytiquement actif et éventuellement des promoteurs et un composant d'alliage extractible, par ajout d'agents d'humidification et de matières d'addition, comme des adjuvants de moulage, des lubrifiants, des plastifiants et/ou des agents porogènes, par homogénéisation de ce mélange et moulage en un corps moulé désiré, par calcination du corps moulé et activation du produit préliminaire de catalyseur ainsi obtenu au moyen d'extraction partielle ou complète du composant d'alliage extractible ainsi que lavage définitif du catalyseur terminé,
caractérisé en ce que
comme liant on utilise un ou plusieurs métaux catalyseurs purs et en ce que la calcination du corps moulé est réalisée à des températures en dessous de 850°C.

2. Catalyseur mis en forme selon la revendication 1,
caractérisé en ce que
les métaux catalyseurs sont choisis dans les alliages de catalyseur dans le groupe nickel, cobalt, cuivre et fer, en ce que comme composant lessivable d'alliage on utilise l'aluminium, le zinc ou le silicium, en particulier l'aluminium, avec un rapport pondéral entre les métaux catalyseurs et le composant d'alliage lessivable dans les alliages de catalyseur de 30:70 à 70:30 et en ce que les métaux catalyseurs purs agissant comme liants sont également choisis dans le groupe nickel, cobalt, cuivre et fer.

3. Catalyseur mis en forme selon la revendication 2,
caractérisé en ce que
les alliages de catalyseur et les métaux catalyseurs purs, agissant comme liants se trouvent dans le rapport pondéral l'un par rapport à l'autre de 100:20 à 100:0,5.

4. Catalyseur mis en forme selon la revendication 3,
caractérisé en ce que
les particules d'alliages de catalyseurs en poudre ont une grandeur de grains moyenne comprise entre 10 et 500 µm et la grandeur de grains moyenne des métaux catalyseurs en poudre utilisés est plus petite que celle des alliages de catalyseurs.

5. Catalyseur mis en forme selon les revendications 1 à 4,
caractérisé en ce que
les alliages de catalyseur sont encore dotés comme promoteurs jusqu'à 15 % en poids par rapport au poids des alliages de catalyseur des éléments chrome, fer, cobalt, tantale et/ou titane.

6. Catalyseur mis en forme selon les revendications 1 à 4,
caractérisé en ce que
il est encore doté comme promoteur de molybdène.

7. Catalyseur mis en forme selon les revendications 1 à 6,
caractérisé en ce que
il possède une coque activée ayant une épaisseur de 0,05 à 1 mm de préférence de 0,1 à 0,5 mm.

8. Catalyseur mis en forme selon les revendications 1 à 7,
caractérisé en ce que
il comporte une densité de 1,3 à 5,5 g/cm³ et un volume de pores de 0,01 à 0,5 cm³/g.

9. Procédé de préparation d'un catalyseur en lit fixe à métal selon Raney formé par préparation d'un mélange de poudre au moins d'un alliage de catalyseur et au moins d'un liant, mélange dans lequel les alliages de catalyseurs contiennent respectivement au moins un métal de catalyseur catalytiquement actif et éventuellement des promoteurs et un composant d'alliage lessivable, avec addition d'agents d'humidification et de matières d'addition comme des agents de moulage, des lubrifiants, des plastifiants et/ou des agents porogènes, avec homogénéisation de ce mélange et moulage en corps moulés désirés, avec calcination des corps moulés et activation des produits préliminaires de catalyseur ainsi obtenus par extraction partielle ou complète du composant d'alliage extractible ainsi que lavage définitif du catalyseur terminé,
caractérisé en ce que
comme liant on utilise un ou plusieurs métaux catalyseurs purs et en ce que la calcination du corps moulé est réalisée à des températures en dessous de 850°C.

10. Procédé selon la revendication 9,
caractérisé en ce que
les métaux catalyseurs sont choisis dans les alliages de catalyseur à partir du groupe nickel, cobalt, cuivre et fer, en ce que comme composant d'alliage on utilise l'aluminium, le zinc ou le silicium, en particulier l'aluminium, avec un rapport pondéral entre les métaux de catalyseur et le composant d'alliage extractible dans les alliages de catalyseurs de 30:70 à 70:30 et en ce que les métaux catalyseurs purs agissant comme liants sont choisis également dans le groupe du nickel, cobalt, cuivre et fer.

11. Procédé selon la revendication 10,
caractérisé en ce que
les alliages de catalyseur et les métaux catalyseurs purs agissant comme liant se trouvent l'un par rapport à l'autre dans le rapport pondéral de 100:20 à 100:0,5.

12. Procédé selon la revendication 11,
caractérisé en ce que
les particules des alliages de catalyseur pulvérulents ont une grandeur de grains moyenne comprise entre 10 et 500 µm et la grandeur moyenne de grains des métaux catalyseurs pulvérulents utilisés comme liants est plus petite que celle des alliages de catalyseur.

13. Procédé selon les revendications 9 à 12,
caractérisé en ce que
l'extraction du composant d'alliage est prolongée jusqu'à ce que la coque lessivée et donc activée possède une épaisseur de 0,05 à 1,0 mm, de préférence de 0,1 à 0,5 mm.

14. Procédé selon les revendications 9 à 13,
caractérisé en ce que
les alliages de catalyseur sont encore dotés comme promoteurs jusqu'à 15 % en poids par rapport au poids des alliages de catalyseur des éléments chrome, fer, cobalt, tantale et/ou titane.

15. Procédé selon les revendications 9 à 13,
caractérisé en ce que
les catalyseurs après l'activation sont dotés comme promoteur de molybdène par introduction dans une solution de molybdène à haute température.

16. Utilisation du catalyseur mis en forme selon les revendications 1 à 8 pour l'hydrogénation de composés organiques en lit fixe.

17. Produit préliminaire de catalyseur pour un catalyseur en lit fixe à métal du type Raney,
caractérisé en ce que
il contient un mélange intime de poudres d'au moins un alliage de catalyseur et d'au moins un métal catalyseur actif catalytiquement pur comme liant, mélange dans lequel les alliages de catalyseur contiennent respectivement au moins également un métal catalyseur et éventuellement des promoteurs ainsi qu'un composant d'alliage lessivable, en ce que les particules des alliages de catalyseur et des métaux catalyseurs sont frittés en un corps moulé mécaniquement stable, qui a une densité de 1,3 à 5,5 g/cm³, un volume de pores jusqu'à 0,5 cm³/g ainsi qu'une surface BET inférieure à 1 m²/g et en ce que le rapport de poids entre les métaux catalyseurs contenus dans le corps moulé et le composant d'alliage extractible se situe entre 30:70 et 75:25.

18. Produit préliminaire de catalyseur selon la revendication 17,
caractérisé en ce que
les métaux catalyseurs sont choisis dans les alliages de catalyseurs à partir du groupe nickel, cobalt, cuivre et fer, en ce que comme composant d'alliage extractible on utilise d'aluminium, le zinc ou le silicium, en particulier l'aluminium, avec un rapport pondéral entre les métaux catalyseurs et le composant d'alliage extractible dans les alliages de catalyseur de 30:70 à 70:30 et en ce que les métaux catalyseurs purs agissant comme liants sont choisis également dans le groupe nickel, cobalt, cuivre et fer.

19. Produit préliminaire de catalyseur selon la revendication 17,
caractérisé en ce que
les grandeurs moyennes des grains de particules des alliages de catalyseur se situent entre 10 et 500 µm et les grandeurs moyennes de grain des métaux catalyseurs sont plus petites que les grandeurs moyennes de grain des alliages de catalyseurs et en ce que le rapport pondéral entre les alliages de catalyseurs et les métaux catalyseurs se montent de 100:20 à 100:0,5.

20. Produit préliminaire de catalyseur selon la revendication 19,
caractérisé en ce que
les alliages de catalyseurs sont encore dotés comme promoteurs jusqu'à 15 % en poids par rapport au poids des alliages de catalyseur des éléments chrome, fer, cobalt, tantale et/ou titane.
